(19) Europäisches Patentamt
European Patent Office
Office européen des brevets

(11) **EP 4 552 482 A1**

(12) **EUROPEAN PATENT APPLICATION**

(43) Date of publication:
14.05.2025 Bulletin 2025/20

(21) Application number: 24153688.7

(22) Date of filing: 24.01.2024

(51) International Patent Classification (IPC):
**A01G 31/00** (2018.01)

(52) Cooperative Patent Classification (CPC):
**A01G 31/00; A01G 33/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 09.11.2023 KR 20230154137

(71) Applicants:
• **Viroute Inc.
Daegu (KR)**

• **Huh, Tae Yook
Daegu (KR)**

(72) Inventors:
• **HUH, Tae Yook
Daegu (KR)**
• **KIM, Jeong Hyun
Daegu (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **APPARATUS AND METHOD FOR CULTIVATING AQUATIC PLANT USING IMAGE RECOGNITION**

(57) The present disclosure includes a cultivation unit (110) configured to accommodate the aquatic plant, a camera unit (120) configured to capture an image of the cultivation unit, and a controller (130) configured to analyze a doubling time in the image of the cultivation unit using image recognition and analyze a harvest cycle and a one-time harvest amount of the aquatic plant based on the analyzed doubling time of the aquatic plant.

Fig. 1

EP 4 552 482 A1

**Description**

## CROSS-REFERENCE TO RELATED APPLICATION

This application claims priority to Korean Patent Application No. 10-2023-0154137 filed on 11.09, 2023 and all the benefits accruing therefrom under 35 U.S.C. §119, the contents of which are incorporated by reference in their entirety.

## BACKGROUND

The present disclosure relates to an apparatus and a method for cultivating an aquatic plant using image recognition.

In the midst of actively developing protein sources such as a meat substitute due to climate change and environmental issues, aquatic plants, preferably, duckweed is drawing attention as advanced food ingredients since the fact that the duckweed has a significantly lower level of antipathy in the market than edible insects, is suitable for vegans, is a non-allergenic vegetable source of high protein, and so on.

Accordingly, as the number of domestic and foreign companies using aquatic plants as raw materials for high-protein foods or cosmetics increases, investment in aquatic plants on an industrial scale is increasing.

The growth rate of aquatic plants is very fast, doubling every 48 hours, and unlike leaf vegetables or fruit vegetables, rather than a part of the body tissue, the plants are entirely harvested, and thus the overall harvest amount may vary greatly by adjusting the harvest cycle.

As aquatic plants mainly grow along the shores of river estuaries, ponds, and reservoirs, traditionally, people have directly worn chest waders, gone into the water, and collected the aquatic plants by hand using landing nets.

However, this method of collecting aquatic plants has the problem of not only being a difficult manual work and labor-intensive production process, but also being very dangerous in that it requires people to go directly into the water to do the work.

In addition, especially in the case of river aquatic plants, they are highly contaminated with heavy metals, so there are problems in terms of the food and pharmaceutical stability of the raw materials and the safety of the collection process.

Examples of the related art include Korean Patent Registration No. 10-0279462 (registered on June 11, 2002).

## SUMMARY

The present disclosure provides an apparatus and a method for cultivating an aquatic plant using image recognition, capable of cultivating an aquatic plant of uniform quality suitable for use as food and pharmaceutical materials without contamination problems.

The present disclosure also provides an apparatus and a method for cultivating an aquatic plant using image recognition, capable of cultivating an aquatic plant even in a small area.

The present disclosure also provides an apparatus and a method for cultivating an aquatic plant using image recognition, capable of automatically harvesting an aquatic plant.

The present disclosure also provides an apparatus and a method for cultivating an aquatic plant using image recognition, capable of increasing the yield of an aquatic plant.

Technical problems to be solved in the present disclosure are not limited to the technical problems to be solved, which have been mentioned above, and other technical problems to be solved that are not mentioned will be clearly understood by those of ordinary skill in the art to which the present disclosure belongs from the following description.

In accordance with an exemplary embodiment of the present disclosure, an apparatus for cultivating an aquatic plant includes a cultivation unit configured to accommodate the aquatic plant, a camera unit configured to capture an image of the cultivation unit, and a controller configured to analyze a doubling time in the image of the cultivation unit using image recognition and analyze a harvest cycle and a one-time harvest amount of the aquatic plant based on the analyzed doubling time of the aquatic plant.

In accordance with another exemplary embodiment of the present disclosure, an apparatus for cultivating an aquatic plant includes a plurality of cultivation units configured to accommodate the aquatic plant, a camera unit installed in some of the plurality of cultivation units and configured to capture an image, and a controller configured to analyze a doubling time in the image of the cultivation unit using image recognition and analyze a harvest cycle and a one-time harvest amount of the aquatic plant based on the analyzed doubling time of the aquatic plant, in which the controller analyzes a harvest cycle and a one-time harvest amount of the aquatic plant accommodated in the cultivation unit where the camera unit is not installed using a harvest cycle and a one-time harvest amount of the aquatic plant accommodated in a nearby cultivation unit where the camera unit is installed through interpolation.

Here, the controller may calculate an area of the aquatic plant in the image of the cultivation unit and analyze the doubling time of the aquatic plant based on the calculated area of the aquatic plant.

Here, the controller may analyze the harvest cycle of the aquatic plant using [Equation 1] below.

[Equation 1]

$$\Delta t_{optomal} = D log_2 DS$$

(here, $\Delta t_{optomal}$ is the harvest cycle of the aquatic plant, D is the doubling time of the aquatic plant, and S is the one-time harvest amount of the aquatic plant)

Here, the controller may analyze the one-time harvest amount of the aquatic plant using [Equation 2] below.

[Equation 2]

$$S = \frac{1}{D} \times 2^{\frac{t}{D}}$$

(here, S is the one-time harvest amount of the aquatic plant, D is the doubling time of the aquatic plant, and t is the harvest cycle of the aquatic plant)

In addition, the apparatus may further include a harvesting unit configured to harvest the aquatic plant and a nutrient solution supply unit configured to supply nutrient solution to the cultivation unit, and the controller may control supply of the nutrient solution of the nutrient solution supply unit to move the aquatic plant accommodated in the cultivation unit to the harvesting unit according to the harvest cycle and one-time harvest amount of the aquatic plant.

In addition, the apparatus may further include a harvesting unit configured to harvest the aquatic plant and a harvest pump installed in the cultivation unit to move nutrient solution containing the aquatic plant to the harvesting unit, and the controller may control the harvest pump to move the aquatic plant accommodated in the cultivation unit to the harvesting unit according to the harvest cycle and one-time harvest amount of the aquatic plant.

In accordance with still another exemplary embodiment of the present disclosure, a method for cultivating an aquatic plant using image recognition includes capturing, by a camera unit, an image of a cultivation unit where the aquatic plant is accommodated, analyzing, by a controller, a doubling time of the aquatic plant in the image of the cultivation unit using image recognition, and analyzing, by the controller, a harvest cycle and a one-time harvest amount of the aquatic plant based on the analyzed doubling time of the aquatic plant.

Here, the controller may calculate an area of the aquatic plant in the image of the cultivation unit and analyze the doubling time of the aquatic plant based on the calculated area of the aquatic plant.

Here, the controller may analyze the harvest cycle of the aquatic plant using [Equation 3] below.

[Equation 3]

$$\Delta t_{optomal} = D log_2 DS$$

(here, $\Delta t_{optomal}$ is the harvest cycle of the aquatic plant, D is the doubling time of the aquatic plant, and S is the one-time harvest amount of the aquatic plant)

Here, the controller may analyze the one-time harvest amount of the aquatic plant using [Equation 4] below.

[Equation 4]

$$S = \frac{1}{D} \times 2^{\frac{t}{D}}$$

(here, S is the one-time harvest amount of the aquatic plant, D is the doubling time of the aquatic plant, and t is the harvest cycle of the aquatic plant)

Here, the controller may control supply of nutrient solution of a nutrient solution supply unit to move the aquatic plant accommodated in the cultivation unit to a harvesting unit according to the harvest cycle and one-time harvest amount of the aquatic plant.

Here, the controller may control a harvest pump to move the aquatic plant accommodated in the cultivation unit to a harvesting unit according to the harvest cycle and one-time harvest amount of the aquatic plant.

## BRIEF DESCRIPTION OF THE DRAWINGS

Exemplary embodiments can be understood in more detail from the following description taken in conjunction with the accompanying drawings, in which:

FIG. 1 is a configuration diagram of an apparatus for cultivating an aquatic plant using image recognition in accordance with an exemplary embodiment of the present disclosure;
FIG. 2 is a configuration diagram of a cultivation unit in accordance with an exemplary embodiment of the present disclosure;
FIG. 3 is a configuration diagram of a cultivation unit in accordance with another exemplary embodiment of the present disclosure; and
FIG. 4 is a flowchart of a method for cultivating an aquatic plant using image recognition in accordance with still another exemplary embodiment of the present disclosure.

## DETAILED DESCRIPTION OF EMBODIMENTS

It is to be understood that the present disclosure may be variously modified and embodied, and thus particular embodiments thereof will be illustrated in the drawings and described in detail in the Detailed Description. However, this is not intended to limit the present disclosure to the specific embodiments, it should be understood to include all modifications, equivalents, and substitutes included in the spirit and scope of the present disclosure.

It will be understood that, although the terms first, second, etc. may be used herein to describe various elements, these elements are not limited by these terms. These terms are only used to distinguish one element from another element.

It will be understood that when an element is referred to as being "coupled" or "connected" to another element, the element may be directly coupled or connected to the other element, or intervening elements may also be present. In contrast, it will be understood that when an element is referred to as being "directly coupled" or "directly connected" to another element, there are not intervening elements present.

The terms used in the present application are merely provided to describe specific embodiments, and are not intended to limit the present disclosure. The singular forms, "a", "an", and "the" are intended to include the plural forms as well, unless the context clearly indicates otherwise. In the present application, it will be further understood that the terms "includes" and/or "having", when used in this specification, specify the presence of stated features, numbers, steps, operations, elements, components, or combinations thereof, but do not preclude the presence or addition of one or more other features, numbers, steps, operations, elements, components, or combinations thereof.

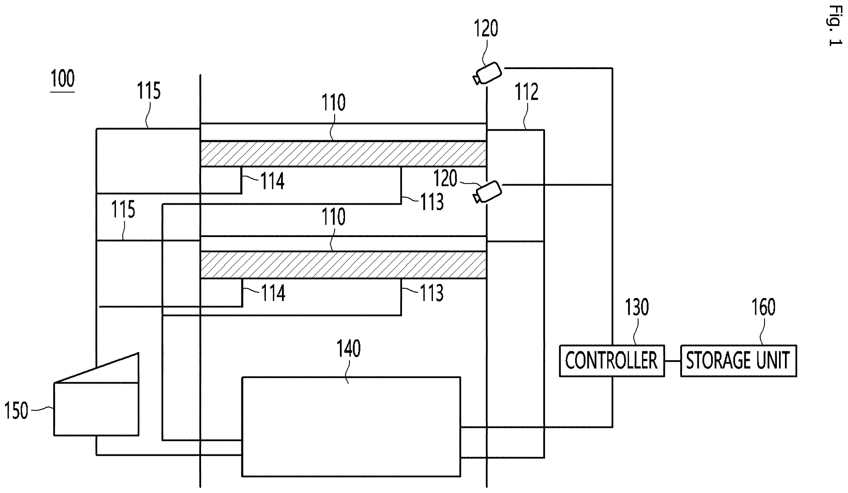

FIG. 1 is a configuration diagram of an apparatus for cultivating an aquatic plant using image recognition in accordance with an exemplary embodiment of the present disclosure.

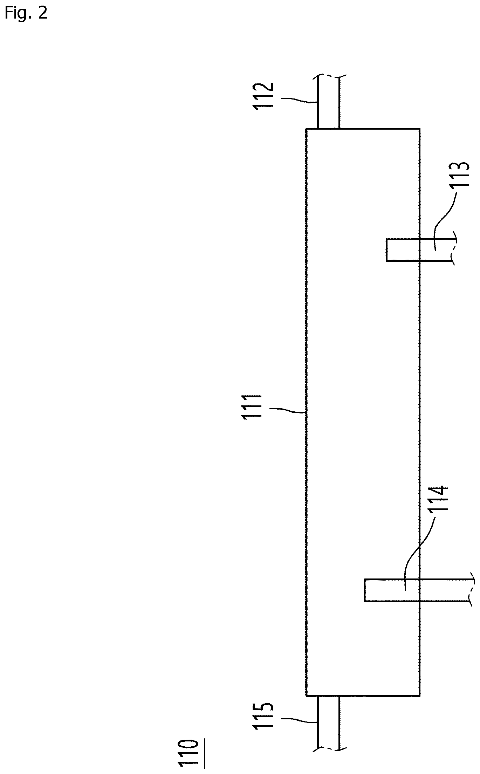

FIG. 2 is a configuration diagram of a cultivation unit in accordance with an exemplary embodiment of the present disclosure.

Referring to FIGS. 1 and 2, an apparatus 100 for cultivating an aquatic plant using image recognition includes cultivation units 110, camera units 120, a controller 130, a nutrient solution supply unit 140, a harvesting unit 150, and a storage unit 160.

The cultivation unit 110 receives nutrient solution from the nutrient solution supply unit 140 and accommodates the supplied nutrient solution and the aquatic plant.

The cultivation unit 110 includes a cultivation bed 111, a nutrient solution supply pipe 112, a water level control pipe 113, a discharge pipe 114, and a bulk discharge pipe 115.

The cultivation bed 111 accommodates the nutrient solution and the aquatic plant supplied from the nutrient solution supply unit 140 through the nutrient solution supply pipe 112.

The nutrient solution supply pipe 112 has one side connected to the nutrient solution supply unit 140 and the other side connected to the cultivation bed 111 to allow the nutrient solution supplied from the nutrient solution supply unit 140 to move and be supplied to the cultivation bed 111.

The water level control pipe 113 is formed to protrude from a portion of the bottom of the cultivation bed 111 to discharge the nutrient solution from the cultivation bed 111 to the nutrient solution supply unit 140 so that the water level of the nutrient solution accommodated in the cultivation bed 111 is controlled, for example, to prevent the aquatic plant or nutrient solution accommodated in the cultivation bed 111 from overflowing to the outside of the cultivation bed 121. Here, the water level control pipe 113 may be lower than the height of the nutrient solution supply pipe 112, the discharge pipe 114, and the bulk discharge pipe 115, and the water level control pipe 113 may be provided with a device, such as a strainer, to prevent the aquatic plant from being discharged.

The discharge pipe 114 is formed to protrude higher than the water level control pipe 113 from a portion of the bottom of the cultivation bed 111, spaced apart from the water level control pipe 113 to discharge the aquatic plant to the connected harvesting unit 150.

The bulk discharge pipe 115 is located at a portion higher than the discharge pipe 114, has one side connected to the cultivation bed 111 and the other side connected to the harvesting unit 150, and allows the harvesting of the aquatic plant in large quantities.

The camera unit 120 is installed in a place where the cultivation unit 110 is able to be photographed and captures an image of the cultivation unit 110. Here, the camera unit 120 may be installed only in some of the plurality of cultivation units 110.

The controller 130 detects the aquatic plant in the captured images using image recognition based on the image of the cultivation unit 110 captured by the camera unit 120 and calculates the area of the aquatic plant. Here, since it is a known technology for the controller 130 to detect an object and calculate the area using image recognition, a detailed description thereof will be omitted, and the image recognition used by the controller 130 may be U-Net or various deep learning methods capable of semantic segmentation.

In addition, the controller 130 analyzes, based on the calculated area of the aquatic plant, a doubling time of the aquatic plant at which there is no change in the area of the aquatic plant by the growth rate of the aquatic plant converging to 0 due to there being no longer space for the aquatic plant to float in the cultivation bed 111. Here, the controller 130 may be trained from at least one of the image captured by the camera unit 120 stored in the storage unit 160 and the area of the aquatic plant calculated by the controller 130 to analyze the growth rate of the aquatic plant based on the change in the area of the aquatic plant over time and also analyze the doubling time based on the analyzed growth rate.

The controller 130 analyzes the harvest cycle and one-time harvest amount of the aquatic plant based on the analyzed doubling time.

Specifically, the controller 130 analyzes the harvest cycle of the aquatic plant using [Equation 1] below based on the analyzed doubling time, and analyzes the one-time harvest amount of the aquatic plant using [Equation 2] below. Here, the controller 130 may analyze the harvest cycle and one-time harvest amount of the aquatic plant by learning the one-time harvest amount of the aquatic plant for each harvest cycle of the aquatic plant according to the doubling time of the aquatic plant.

[Equation 1]

$$\triangle t_{optimal} = D log_2 DS$$

(here, $\triangle t_{optomal}$ is the harvest cycle of the aquatic plant, D is the doubling time of the aquatic plant, and S is the one-time harvest amount of the aquatic plant)

[Equation 2]

$$S = \frac{1}{D} \times 2^{\frac{t}{D}}$$

(here, S is the one-time harvest amount of the aquatic plant, D is the doubling time of the aquatic plant, and t is the harvest cycle of the aquatic plant)

When there is a cultivation unit 110 for which the camera unit 120 is not installed among the plurality of cultivation units 110, the controller 130 analyzes the harvest cycle and the one-time harvest amount of the aquatic plant accommodated in the cultivation unit 110 for which the camera unit 120 is not installed through interpolation using the harvest cycle and one-time harvest amount of the aquatic plant accommodated in a nearby cultivation unit 110 for which the camera unit 120 is installed. This is to save costs because when there are many cultivation units 110 cultivating the aquatic plant, the costs significantly increase when the camera units 120 are installed in the same number as the cultivation units 110.

In addition, the controller 130 controls supply of nutrient solution of the nutrient solution supply unit 140 to move the aquatic plant accommodated in the cultivation bed 111 to the harvesting unit 150 according to the analyzed harvest cycle and one-time harvest amount of the aquatic plant.

Specifically, the controller 130 may control the supply of the nutrient solution of the nutrient solution supply unit 140 so that the level of the nutrient solution accommodated in the cultivation bed 111 is maintained above the height of the discharge pipe 114 and below the bulk discharge pipe 115 according to the analyzed harvest cycle of the aquatic plant. In this case, as the level of the nutrient solution accommodated in the cultivation bed 111 becomes higher than the height of the discharge pipe 114, the aquatic plant located on a surface of the nutrient solution of the cultivation bed 111 flows through the discharge pipe 114 and moves to the harvesting unit 150 connected to the discharge pipe 114, and thus the aquatic plant may be harvested.

Next, the controller 130 analyzes the image captured by the camera unit 120 and controls supply of the nutrient solution to be supplied to the cultivation bed 111 by controlling the nutrient solution supply unit 140 when the amount of change in the aquatic plant in the cultivation bed 111 due to the aquatic plant discharged through the discharge pipe 114 corresponds to the analyzed one-time harvest amount, so that the level of the nutrient solution accommodated in the cultivation bed 111 is below the height of the discharge pipe 114.

The controller 130 may analyze environmental information necessary for cultivating the aquatic plant, such as temperature, lighting, wind, and the like, and control the temperature, lighting, and the like to be suitable for cultivating the aquatic plant, and may analyze the concentration of the nutrient solution in at least one of the cultivation bed 111 and the nutrient solution supply unit 140 and perform control such that nutrient solution with a concentration suitable for cultivating the aquatic plant is supplied to the cultivation bed 111. Here, since it is a known technology for the controller 130 to control temperature, lighting, and nutrient solution concentration, detailed description thereof will be omitted.

In addition, the controller 130 periodically performs learning based on at least one of the image captured by the camera unit 120 stored in the storage unit 160, the doubling time of the aquatic plant analyzed by the controller 130, the harvest cycle of the aquatic plant, and the one-time harvest amount of the aquatic plant.

The nutrient solution supply unit 140 has one side connected to the nutrient solution supply pipe 112 so that the nutrient solution is supplied to the cultivation bed 111 through the nutrient solution supply pipe 112 under control by the controller 130.

In addition, the nutrient solution supply unit 140 has the other side connected to the water level control pipe 113 and the harvesting unit 150 so that the nutrient solution accommodated in the cultivation bed 111 discharged through the water level control pipe 113 and the nutrient solution discharged to the harvesting unit 150 are moved and stored. Here, the nutrient solution supply unit 140 may be connected to a nutrient solution raw material tank (not illustrated) and a water supply tank (not illustrated) to receive nutrient solution raw materials and water under control of the controller 130.

The harvesting unit 150 may be equipped with a strainer (not illustrated) and may have one side connected to the discharge pipe 114 and the bulk discharge pipe 115 to receive the aquatic plant and the nutrient solution discharged through any one of the discharge pipe 114 and the bulk discharge pipe 115 and separate them into the aquatic plant and the nutrient solution through the strainer, and the nutrient solution that has moved to the bottom through the strainer may be discharged and moved to the nutrient solution supply unit 140 connected to the other side and the aquatic plant separated at the top through the strainer may be harvested by a user.

The storage unit 160 stores the image captured by the camera unit 120, and the doubling time of the aquatic plant, the harvest cycle of the aquatic plant, and the one-time harvest amount of the aquatic plant, which are analyzed by the controller 130.

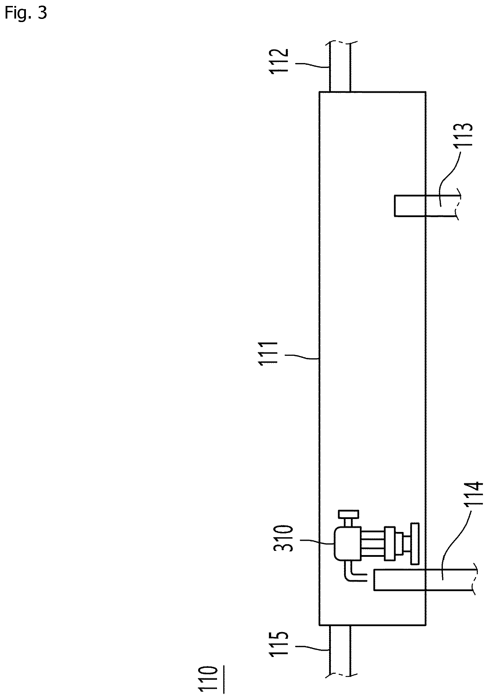

FIG. 3 is a configuration diagram of a cultivation unit in accordance with another exemplary embodiment of the present disclosure.

Referring to FIG. 3, a cultivation unit 110 includes a cultivation bed 111, a nutrient solution supply pipe 112, a water level control pipe 113, a discharge pipe 114, a bulk discharge pipe 115, and a harvest pump 310. Here, the cultivation unit 110, the cultivation bed 111, the nutrient solution supply pipe 112, the water level control pipe 113, the discharge pipe 114, and the bulk discharge pipe 115 are the same as those in FIGS. 1 and 2, and thus detailed descriptions thereof will be omitted.

The harvest pump 310 is installed near the discharge pipe 114 in the cultivation bed 111, and sucks nutrient solution and an aquatic plant from a surface of the cultivation bed 111 under control of a controller 130, and discharges the nutrient solution and the aquatic plant through the discharge pipe 114.

Here, the control unit 130 can control the operation of the harvest pump 310 in accordance with the harvest cycle and one-time harvest amount of the analyzed floating aquatic plants.

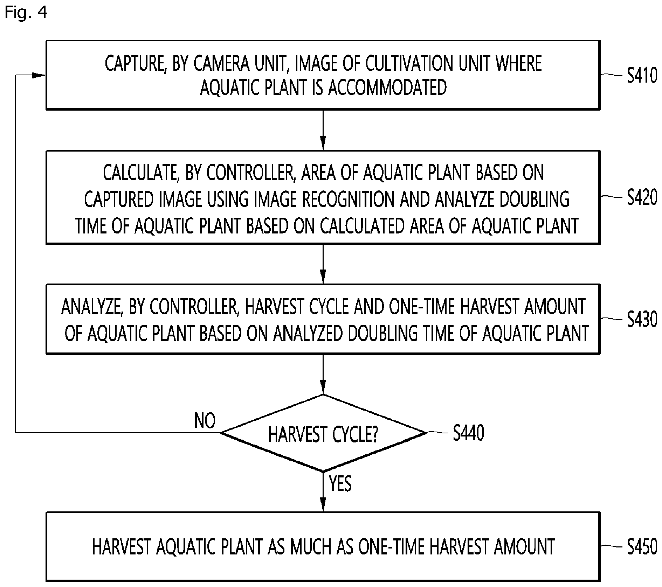

FIG. 4 is a flowchart of a method for cultivating an aquatic plant using image recognition in accordance with still another exemplary embodiment of the present disclosure.

Referring to FIG. 4, in step S410, the camera unit 120 captures an image of the cultivation unit 110 where the aquatic plant is accommodated.

In step S420, the controller 130 calculates the area of the aquatic plant based on the image captured by the camera unit 120 using image recognition, and analyzes the doubling time of the aquatic plant based on the calculated area of the aquatic plant.

In step S430, the controller 130 analyzes the harvest cycle and one-time harvest amount of the aquatic plant based on the analyzed doubling time of the aquatic plant.

In step S440, the controller 130 determines whether the analyzed harvest cycle of the aquatic plant is the harvest cycle, and when it is determined that the analyzed harvest cycle is the harvest cycle of the aquatic plant, the process proceeds to step S450, otherwise, the process returns to step S410.

In step S450, the controller 130 controls the nutrient solution supply unit 140 or the harvest pump 310 to harvest the aquatic plant as much as one-time harvest amount of the aquatic plant.

Specifically, the controller 130 may analyze an image captured by the camera unit 120, and control the nutrient solution supply unit 140 to maintain the level of the nutrient solution accommodated in the cultivation bed 111 above the height of the discharge pipe 114 and below the height of the bulk discharge pipe 115 by supplying the nutrient solution to the cultivation bed 111 until the amount of change in the aquatic plant in the cultivation bed 111 due to the aquatic plant discharged through the discharge pipe 114 corresponds to the analyzed one-time harvest amount, so that the aquatic plant located on the surface of the nutrient solution flows in through the discharge pipe 114 and move to the harvesting unit 150 connected to the discharge pipe 114 to harvest the aquatic plant, or control the harvest pump 310 to suck the nutrient solution and the aquatic plant from the surface of the cultivation bed 111, and then discharge the nutrient solution and the aquatic plant through the discharge pipe 114 to harvest the aquatic plant.

The present disclosure has an effect of cultivating an aquatic plant of uniform quality suitable for use as food and pharmaceutical materials.

In addition, the present disclosure has an effect of reducing costs by allowing cultivation of an aquatic plant even in a small area.

In addition, the present disclosure has an effect of saving labor by automatically harvesting an aquatic plant.

In addition, the present disclosure has an effect of increasing the yield of an aquatic plant.

The effects of the present disclosure are not limited to the effects mentioned above, and other effects not mentioned may be clearly understood by those skilled in the art from the following description.

Although embodiments according to the present disclosure have been described above, the embodiments are merely exemplary, and it is to be understood to persons skilled in the art that various modifications and equivalent other embodiments could be made therefrom. Therefore, the true technical protection scope of the present disclosure should be defined only by the following appended claims.

**Claims**

1. An apparatus for cultivating an aquatic plant, the apparatus comprising:

a cultivation unit configured to accommodate the aquatic plant;
a camera unit configured to capture an image of the cultivation unit; and
a controller configured to analyze a doubling time in the image of the cultivation unit using image recognition and analyze a harvest cycle and a one-time harvest amount of the aquatic plant based on the analyzed doubling time of the aquatic plant.

2. An apparatus for cultivating an aquatic plant, the apparatus comprising:

a plurality of cultivation units configured to accommodate the aquatic plant;
a camera unit installed in some of the plurality of cultivation units and configured to capture an image; and
a controller configured to analyze a doubling time in the image of the cultivation unit using image recognition and analyze a harvest cycle and a one-time harvest amount of the aquatic plant based on the analyzed doubling time of the aquatic plant,
wherein the controller analyzes a harvest cycle and a one-time harvest amount of the aquatic plant accommodated in the cultivation unit where the camera unit is not installed using a harvest cycle and a one-time harvest amount of the aquatic plant accommodated in a nearby cultivation unit where the camera unit is installed through interpolation.

3. The apparatus of claim 1 or 2, wherein the controller calculates an area of the aquatic plant in the image of the cultivation unit and analyzes the doubling time of the aquatic plant based on the calculated area of the aquatic plant.

4. The apparatus of any one of claims 1 to 3, wherein the controller analyzes the harvest cycle of the aquatic plant using [Equation 1] below.

[Equation 1]

$$\triangle t_{optimal} = D \log_2 DS$$

(here, $\triangle t_{optomal}$ is the harvest cycle of the aquatic plant, D is the doubling time of the aquatic plant, and S is the one-time harvest amount of the aquatic plant)

5. The apparatus of any one of claims 1 to 4, wherein the controller analyzes the one-time harvest amount of the aquatic plant using [Equation 2] below.

[Equation 2]

$$S = \frac{1}{D} \times 2^{\frac{t}{D}}$$

(here, S is the one-time harvest amount of the aquatic plant, D is the doubling time of the aquatic plant, and t is the harvest cycle of the aquatic plant)

6. The apparatus of any one of claims 1 to 5, further comprising:

a harvesting unit configured to harvest the aquatic plant; and
a nutrient solution supply unit configured to supply nutrient solution to the cultivation unit, wherein the controller controls supply of the nutrient solution of the nutrient solution supply unit to move the aquatic plant accommodated in the cultivation unit to the harvesting unit according to the harvest cycle and one-time harvest amount of the aquatic plant.

7. The apparatus of any one of claims 1 to 6, further comprising:

a harvesting unit configured to harvest the aquatic plant; and
a harvest pump installed in the cultivation unit to move nutrient solution containing the aquatic plant to the harvesting unit, wherein the controller controls the harvest pump to move the aquatic plant accommodated in the cultivation unit to the harvesting unit according to the harvest cycle and one-time harvest amount of the aquatic plant.

8. A method for cultivating an aquatic plant using image recognition, the method comprising:

capturing, by a camera unit, an image of a cultivation unit where the aquatic plant is accommodated;
analyzing, by a controller, a doubling time of the aquatic plant in the image of the cultivation unit using image recognition; and
analyzing, by the controller, a harvest cycle and a one-time harvest amount of the aquatic plant based on the analyzed doubling time of the aquatic plant.

9. The method of claim 8, wherein the controller calculates an area of the aquatic plant in the image of the cultivation unit and analyzes the doubling time of the aquatic plant based on the calculated area of the aquatic plant.

10. The method of claim 8 or 9, wherein the controller analyzes the harvest cycle of the aquatic plant using [Equation 3] below.

[Equation 3]

$$\triangle t_{optimal} = D \log_2 DS$$

(here, $\triangle t_{optomal}$ is the harvest cycle of the aquatic plant, D is the doubling time of the aquatic plant, and S is the one-time harvest amount of the aquatic plant)

**11.** The method of any one of claims 8 to 10, wherein the controller analyzes the one-time harvest amount of the aquatic plant using [Equation 4] below.

[Equation 4]

$$S = \frac{1}{D} \times 2^{\frac{t}{D}}$$

(here, S is the one-time harvest amount of the aquatic plant, D is the doubling time of the aquatic plant, and t is the harvest cycle of the aquatic plant)

**12.** The method of any one of claims 8 to 11, wherein the controller controls supply of nutrient solution of a nutrient solution supply unit to move the aquatic plant accommodated in the cultivation unit to a harvesting unit according to the harvest cycle and one-time harvest amount of the aquatic plant.

**13.** The method of any one of claims 8 to 12, wherein the controller controls a harvest pump to move the aquatic plant accommodated in the cultivation unit to a harvesting unit according to the harvest cycle and one-time harvest amount of the aquatic plant.

Fig. 1

Fig. 2

Fig. 3

Fig. 4

```
┌─────────────────────────────────────────────────────────────┐
│  CAPTURE, BY CAMERA UNIT, IMAGE OF CULTIVATION UNIT WHERE    │── S410
│             AQUATIC PLANT IS ACCOMMODATED                    │
└─────────────────────────────────────────────────────────────┘
                              ↓
┌─────────────────────────────────────────────────────────────┐
│   CALCULATE, BY CONTROLLER, AREA OF AQUATIC PLANT BASED ON   │
│ CAPTURED IMAGE USING IMAGE RECOGNITION AND ANALYZE DOUBLING  │── S420
│ TIME OF AQUATIC PLANT BASED ON CALCULATED AREA OF AQUATIC PLANT │
└─────────────────────────────────────────────────────────────┘
                              ↓
┌─────────────────────────────────────────────────────────────┐
│ ANALYZE, BY CONTROLLER, HARVEST CYCLE AND ONE-TIME HARVEST AMOUNT │── S430
│ OF AQUATIC PLANT BASED ON ANALYZED DOUBLING TIME OF AQUATIC PLANT │
└─────────────────────────────────────────────────────────────┘
                              ↓
        NO            ◇ HARVEST CYCLE? ◇ ── S440
                              │ YES
                              ↓
┌─────────────────────────────────────────────────────────────┐
│    HARVEST AQUATIC PLANT AS MUCH AS ONE-TIME HARVEST AMOUNT  │── S450
└─────────────────────────────────────────────────────────────┘
```

Europäisches
Patentamt

European
Patent Office

Office européen
des brevets

# EUROPEAN SEARCH REPORT

Application Number

EP 24 15 3688

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 201 051 A1 (UNIPER KRAFTWERKE GMBH [DE]) 16 June 2022 (2022-06-16) * paragraphs [0013] - [0019], [0091], [0124], [0126], [0144], [0145]; figures 1-4 * | 1-13 | INV. A01G31/00 |
| X | US 2015/234394 A1 (SHOHAM TSIPI [IL] ET AL) 20 August 2015 (2015-08-20) * paragraphs [0019] - [0023]; figure 1 * | 1-13 | |
| X | US 2020/000052 A1 (LOVAS BRIAN [US] ET AL) 2 January 2020 (2020-01-02) * paragraphs [0022], [0027], [0040] - [0042]; figure 1 * | 1-13 | |

TECHNICAL FIELDS
SEARCHED      (IPC)

A01G
C12M

The present search report has been drawn up for all claims

| Place of search | Date of completion of the search | Examiner |
|---|---|---|
| The Hague | 14 June 2024 | Dagnelies, Joëlle |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.....................................................................
& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**  EP 24 15 3688

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2024

| Patent document cited in search report | | Publication date | Patent family member(s) | | Publication date |
|---|---|---|---|---|---|
| CA 3201051 | A1 | 16-06-2022 | CA | 3201051 A1 | 16-06-2022 |
| | | | DE | 102020133132 A1 | 15-06-2022 |
| | | | EP | 4102956 A1 | 21-12-2022 |
| | | | US | 2024016107 A1 | 18-01-2024 |
| | | | WO | 2022123076 A1 | 16-06-2022 |
| US 2015234394 | A1 | 20-08-2015 | CN | 104540378 A | 22-04-2015 |
| | | | EP | 2861057 A1 | 22-04-2015 |
| | | | JP | 6255013 B2 | 27-12-2017 |
| | | | JP | 2015522261 A | 06-08-2015 |
| | | | US | 2015234394 A1 | 20-08-2015 |
| | | | WO | 2013192195 A1 | 27-12-2013 |
| US 2020000052 | A1 | 02-01-2020 | US | 2018271041 A1 | 27-09-2018 |
| | | | US | 2020000052 A1 | 02-01-2020 |

EPO FORM P0459

For more details about this annex : see Official Journal of the European Patent Office, No. 12/82

**REFERENCES CITED IN THE DESCRIPTION**

**Patent documents cited in the description**

- KR 1020230154137

- KR 100279462